(19) Europäisches Patentamt
European Patent Office
Office européen des brevets

(11) **EP 4 138 477 A1**

(12) **EUROPEAN PATENT APPLICATION**
published in accordance with Art. 153(4) EPC

(43) Date of publication:
**22.02.2023 Bulletin 2023/08**

(21) Application number: **20931475.6**

(22) Date of filing: **13.04.2020**

(51) International Patent Classification (IPC):
**H04W 72/04** *(2009.01)* **H04L 5/00** *(2006.01)*

(52) Cooperative Patent Classification (CPC):
**H04L 5/00; H04W 72/04**

(86) International application number:
**PCT/CN2020/084561**

(87) International publication number:
**WO 2021/207900 (21.10.2021 Gazette 2021/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.**
**Beijing 100085 (CN)**

(72) Inventor: **MU, Qin**
**Beijing 100085 (CN)**

(74) Representative: **Gunzelmann, Rainer**
**Wuesthoff & Wuesthoff**
**Patentanwälte PartG mbB**
**Schweigerstraße 2**
**81541 München (DE)**

(54) **PHYSICAL DOWNLINK CONTROL CHANNEL CONFIGURATION METHOD, APPARATUS, DEVICE, AND STORAGE MEDIUM**

(57) The embodiments of the present disclosure relate to the field of communication technologies, disclose a physical downlink control channel (PDCCH) configuration method, an apparatus, a device, and a storage medium. The PDCCH configuration method comprises: determining an aggregation level subset from a first set of aggregation levels; sending configuration information of the aggregation level subset to user equipment (UE); the first set of aggregation levels being a full set of aggregation levels configured to be used by the first type of UE; a second set of aggregation levels being a full set of aggregation levels configured to be used by the second type of LTE; the aggregation levels included in the first set of aggregation levels being different from or not completely the same as the aggregation levels included in the second set of aggregation levels. The PDCCH configuration method provided in the embodiments of the present disclosure can increase the range of coverage that can be reached by a PDCCH.

FIG. 2

## Description

### TECHNICAL FIELD

Embodiments of the disclosure relate to the field of communication technologies, and more particularly, to a method, an apparatus, a device and a storage medium for configuring a physical downlink control channel (PDCCH).

### BACKGROUND

In a current new radio (NR) system, one PDCCH includes multiple control channel elements (CCEs). The number of CCEs in one PDCCH can be called an aggregation level (AL).

ALs of PDCCHs supported by different user equipments (UEs) may be different due to different equipment capabilities. For some UEs, for example, a NR-lite UE, due to some limited equipment functions such as a reduction on reception antennas, channel conditions may be reduced compared with a normal NR UE, and the required AL is relatively higher than that of the normal NR LTE. Under the existing configuration, the AL of the PDCCH supported by the NR-lite UE is relatively smaller, resulting in a reduced coverage of the PDCCH of the LTE, which may not satisfy application requirements well.

### SUMMARY

Embodiments of the disclosure aim to at least solve one of the above-mentioned technical deficiencies, and the following technical solutions are proposed.

According to a first aspect, a method for configuring a PDCCH is provided, including: determining a subset of ALs from a first set of ALs; and transmitting configuration information of the subset of ALs to a LTE; in which the first set of ALs is a complete set of ALs configured for a first-type UE, a second set of ALs is a complete set of ALs configured for a second-type LTE; and ALs in the first set of ALs are not the same or not completely the same as ALs in the second set of ALs.

In some embodiments of the first aspect, a number of ALs in the first set of ALs is greater than a number of ALs in the second set of ALs.

In some embodiments of the first aspect, the second set of ALs is a subset of the first set of ALs.

In some embodiments of the first aspect, a maximum AL in the first set of ALs is greater than a maximum AL in the second set of ALs.

In some embodiments of the first aspect, the first set of ALs includes at least one AL that is different from any AL in the second set of ALs, and the different AL is less than a maximum AL in the second set of ALs.

In some embodiments of the first aspect, the first set of ALs includes a first target AL, and the first target AL is determined based on a number of resources in a control resource set of the LTE.

In some embodiments of the first aspect, before determining the subset of ALs from the first set of ALs, the method further includes determining that the UE is the first-type UE.

In some embodiments of the first aspect, the first set of ALs is configured for a user-specific search space of the first-type UE.

In some embodiments of the first aspect, the first set of ALs includes at least one AL that is different from any AL in the second set of ALs; the different AL is configured for the user-specific search space of the first-type LTE, and/or the different AL is configured for a designated common search space used by the first-type UE.

In some embodiments of the first aspect, the method further includes: configuring a subcarrier spacing used by a downlink control channel of the LTE; in which the subcarrier spacing used by the downlink control channel is less than a first specified threshold; and/or, a number of orthogonal frequency division multiplexing symbols occupied by a downlink control resource set is greater than a second specified threshold; and/or, a bandwidth occupied by the downlink control resource set is greater than a third specified threshold.

In some embodiments of the first aspect, a capability of the first-type LTE is different from a capability of the second-type LTE; and/or the first-type UE and the second-type UE have different network requirements.

In some embodiments of the first aspect, a maximum AL in the first set of ALs is a $n^{th}$ power of 2, where n is a positive integer greater than or equal to 5.

In some embodiments of the first aspect, ALs in the first set of ALs are {1,2,4,8,16,32}; or, ALs in the first set of ALs are {1,2,4,8,12,16,32}; or, ALs in the first set of ALs are {1,2,4,8,16,24,32}; or, ALs in the first set of ALs are {1,2,4,8,16,24}; or, ALs in the first set of ALs are {1,2,4,8,12,16,24,32}; or, ALs in the first set of ALs are {1,2,4,8,12,16}.

According to a second aspect, a method for configuring a PDCCH is provided, including: receiving configuration information of a subset of ALs from a base station; in which, the subset of ALs is determined by the base station from a first set of AL; the first set of ALs is a complete set of ALs configured for a first-type UE; a second set of ALs is a complete set of ALs configured for a second-type LTE; and ALs in the first set of ALs are not the same or not completely the same as ALs in the second set of ALs.

In some embodiments of the first aspect, the subset of ALs includes a first target AL, and the first target AL is determined by: obtaining configuration information of a control resource set; determining a first AL supported by the UE based on the configuration information of the control resource set; determining a second AL; and using a smaller one of the first AL and the second AL as the first target AL.

In some embodiments of the first aspect, determining the second AL includes: receiving indication information from the base station, and determining the second AL according to the indication information; or, determining a maximum AL in the first set of ALs except the first target AL as the second AL.

According to a third aspect, an apparatus for configuring a PDCCH is provided, including: a first determining module configured to determine a subset of ALs from a first set of ALs; and a first configuring module configured to transmit configuration information of the subset of ALs to a UE; in which the first set of ALs is a complete set of ALs configured for a first-type LTE, a second set of ALs is a complete set of ALs configured for a second-type LTE; and ALs in the first set of ALs are not the same or not completely the same as ALs in the second set of ALs.

In some embodiments of the third aspect, a number of ALs in the first set of ALs is greater than a number of ALs in the second set of ALs.

In some embodiments of the third aspect, the second set of ALs is a subset of the first set of ALs.

In some embodiments of the third aspect, a maximum AL in the first set of ALs is greater than a maximum AL in the second set of ALs.

In some embodiments of the third aspect, the first set of ALs includes at least one AL that is different from any AL in the second set of ALs, and the different AL is less than a maximum AL in the second set of ALs.

In some embodiments of the third aspect, the first set of ALs includes a first target AL, and the first target AL is determined based on a number of resources in a control resource set of the LTE.

In some embodiments of the third aspect, the apparatus further includes: a second determining module, configured to determine that the LTE is the first-type LTE.

In some embodiments of the third aspect, the first set of ALs is configured for a user-specific search space of the first-type UE.

In some embodiments of the third aspect, the first set of ALs includes at least one AL that is different from any AL in the second set of ALs; the different AL is configured for the user-specific search space of the first-type LTE, and/or the different AL is configured for a designated common search space used by the first-type UE.

In some embodiments of the third aspect, the apparatus further includes: a second configuring module, configured to configure a subcarrier spacing used by a downlink control channel of the UE; in which the subcarrier spacing used by the downlink control channel is less than a first specified threshold; and/or, a number of orthogonal frequency division multiplexing symbols occupied by a downlink control resource set is greater than a second specified threshold; and/or, a bandwidth occupied by the downlink control resource set is greater than a third specified threshold.

In some embodiments of the third aspect, a capability of the first-type LTE is different with a capability of the second-type UE; and/or the first-type LTE and the second-type UE have different network requirements.

In some embodiments of the third aspect, a maximum AL in the first set of ALs is a $n^{th}$ power of 2, where n is a positive integer greater than or equal to 5.

In some embodiments of the third aspect, ALs in the first set of ALs are {1,2,4,8,16,32}; or, ALs in the first set of ALs are {1,2,4,8,12,16,32}; or, ALs in the first set of ALs are {1,2,4,8,16,24,32}; or, ALs in the first set of ALs are {1,2,4,8,16,24}; or, ALs in the first set of ALs are {1,2,4,8,12,16,24,32}; or, ALs in the first set of ALs are {1,2,4,8,12,16}.

According to a fourth aspect, an apparatus for configuring a PDCCH is provided, including: a receiving module configured to receive configuration information of a subset of ALs from a base station; in which, the subset of ALs is determined by the base station from a first set of ALs; the first set of ALs is a complete set of ALs configured for a first-type LTE; a second set of ALs is a complete set of ALs configured for a second-type UE; and ALs in the first set of ALs are not the same or not completely the same as ALs in the second set of ALs.

In some embodiments of the fourth aspect, the subset of ALs includes a first target AL, and the first target AL is determined by: obtaining configuration information of a control resource set; determining a first AL supported by the LTE based on the configuration information of the control resource set; determining a second AL; and using a smaller one of the first AL and the second AL as the first target AL.

In some embodiments of the fourth aspect, determining the second AL includes: receiving indication information from the base station, and determining the second AL according to the indication information; or, determining a maximum AL in the first set of ALs except the first target AL as the second AL.

According to a fifth aspect, an electronic device is provided, including a memory, a processor, and a computer program stored in the memory and capable of running on the processor. The processor is configured to perform any method for configuring a PDCCH as described in the first aspect of embodiments of the disclosure when the program is executed, or the processor is configured to perform any method for configuring a PDCCH as described in the second aspect of embodiments of the disclosure when the program is executed.

According to a sixth aspect, a computer-readable storage medium is provided, and a computer program is stored on the computer-readable storage medium. When the program is executed by a processor, any method for configuring a PDCCH in the first aspect of embodiments of the disclosure is performed or any method for configuring a PDCCH in the second aspect of embodiments of the disclosure is performed.

The technical solutions provided by embodiments of the disclosure have the following beneficial effects. The base station determines the subset of ALs from the first set of ALs, elements in the first set of ALs and elements in the second set of ALs are different, and elements in the first set of ALs match characteristics of resource configuration and usage scenarios of the first-type LTE better and can provide the better coverage for the first-type LTE.

Additional aspects and advantages of embodiments of the disclosure will be given in part in the following descriptions, become apparent in part from the following descriptions, or be learned from the practice of embodiments of the disclosure.

## BRIEF DESCRIPTION OF THE DRAWINGS

These and other aspects and advantages of embodiments of the disclosure will become apparent and more readily from the following descriptions made with reference to the drawings, in which:

FIG. 1 is an environment diagram of a method for configuring a PDCCH according to some embodiments of the disclosure.
FIG. 2 is a flowchart of a method for configuring a PDCCH according to some embodiments of the disclosure.
FIG. 3 is a scenario of a method for configuring a PDCCH according to some embodiments of the disclosure.
FIG. 4 is a scenario of a method for configuring a PDCCH according to some embodiments of the disclosure.
FIG. 5 is a block diagram of an apparatus for configuring a PDCCH according to some embodiments of the disclosure.
FIG. 6 is a block diagram of an apparatus for configuring a PDCCH according to some embodiments of the disclosure.
FIG. 7 is a block diagram of an electronic device for configuring a PDCCH according to some embodiments of the disclosure.

## DETAILED DESCRIPTION

Reference will now be made in detail to some embodiments of the disclosure, examples of which are illustrated in the accompanying drawings. The same or similar elements and elements having the same or similar functions are denoted by like reference numerals throughout the descriptions. The embodiments described herein with reference to the accompanying drawings are explanatory, illustrative, and used to generally understand the disclosure. The embodiments shall not be construed to limit the disclosure.

Those skilled in the art can understand that, the singular forms "a," "an," "said," and "the" described herein are intended to include the plural forms as well, unless the context clearly indicates otherwise. It should be further understood that the terms "comprise," "include," and the like used in the description of embodiments of the disclosure refers to the presence of features, integers, steps, operations, elements and/or components, but do not exclude the presence or addition of one or more other features, integers, steps, operations, elements, components, and/or a combination thereof. It should be understood that, when it refers to an element as being "connected" or "coupled" to another element, it can be directly connected or coupled to the other element or intervening elements may also be present. In addition, "connected" or "coupled" used herein may include wireless connection or wireless coupling. The term "and/or" as used herein includes all or any one and all combinations of one or more of associated listed items.

In order to make objectives, technical solutions, and advantages of embodiments of the disclosure clearer, the following will further describe embodiments of the disclosure in detail with reference to the accompanying drawings.

Hereinafter, some terms in embodiments of the disclosure will be explained to facilitate the understanding of those skilled in the art.

1) A user equipment (LTE), which includes a device that provides voice and/or data connectivity to a user. For example, it may include a handheld device with a wireless connection function, or a processing device connected to a wireless modem. The LTE may communicate with a core network via a radio access network (RAN) and exchange voice and/or data with the RAN. The UE may include a wireless terminal equipment, a mobile terminal equipment, a subscriber unit, a subscriber station, a mobile station, a mobile, a remote station, an access point (AP), a remote terminal, an access terminal, a user terminal, a user agent, a user device, or the like. For example, it may include a mobile phone (or "cellular" phone), a computer with a mobile terminal device, a portable, pocket-sized, handheld, computer-built or vehicle-mounted mobile device, a smart wearable device, or the like, such as, a personal communication service (PCS) phone, a cordless phone, a session initiation protocol (SIP) phone, a wireless local loop (WLL) station, a personal digital assistant (PDA), or the like. It also includes a restricted device, such as a device with low power consumption, a device with limited storage capabilities, or a device with limited computing capabilities, for example, an information sensing device including barcodes, radio frequency identification (RFID), sensors, global positioning system (GPS), laser scanners, and the like.

As an example and not a limitation, in some embodiments of the disclosure, the UE may also be a wearable device. The wearable device can also be called a smart wearable device. It is a general term of wearable devices developed by using wearable technologies to intelligently design everyday wear, such as glasses, gloves, watches, clothing, and shoes. A wearable device is a portable device that is directly worn on the body or integrated into the user's clothes or accessories. The wearable device is not only a kind of hardware device but also realizes powerful functions through software support, data interaction, and cloud interaction. In a broad sense, the smart wearable devices include a kind of devices, which is full-featured, large-sized, and has complete or partial functions that can be achieved without relying on smart phones, such as smart watches or smart glasses, and another kind of devices which only focus on a certain type of function and need to cooperate with other devices such as smart phones, such as all kinds of smart bracelets, smart helmets, smart jewelry or the like for physical sign monitoring.

2) A base station, which refers to a device that communicates with the LTE via one or more cells through a radio interface in an access network. The base station can be used to convert received radio frames and internet protocol (IP) packets to each other, as a router between the LTE and the rest of the access network, where the rest of the access network can include the IP network. The base station can also coordinate the attribute management of the radio interface. For example, the base station may include an evolved base station (NodeB or eNB or e-NodeB) in a long term evolution (LTE) system or a LTE advanced system (LTE-A), a next generation node B (gNB) in the fifth generation (5G) NR system, or a centralized unit (CU) and a distributed unit (DU) in a cloud radio access network (Cloud RAN) system, or the like, which is not limited in some embodiments of the disclosure.

In order to better understand the solutions provided by embodiments of the disclosure, the following first introduces related technologies involved in embodiments of the disclosure.

In the fourth generation (4G) LTE system, in order to support Internet of Things (IoT) services, two technologies, machine-type communication (MTC) and narrow band Internet of Things (NB-IoT), are proposed. These two technologies are aimed at low-speed, high-latency and other scenarios, such as meter reading, environmental monitoring, and the like. At present, NB-IoT can only support a maximum rate of several hundreds of kilobytes and MTC can only support a maximum rate of few megabytes. On the other hand, with the continuous development of IoT services, such as the popularization of video surveillance, smart home, wearable devices, and industrial sensor monitoring, these services usually require a speed rate of tens of megabytes to 100 megabytes, and also have relatively high requirements for delay. Therefore, MTC and NB-IoT technologies in LTE are difficult to satisfy the requirements. Based on this situation, many companies have proposed to design a new IoT technology in the 5G NR interface to cover these mid-end IoT devices.

At the same time, similar to the IoT device in LTE, the terminal capacity is lower than that of an ordinary NR terminal. It can also be called a reduced capability terminal user. In this disclosure, there reduced capability terminal users can be defined as NR-lite users. Usually they need to satisfy the following requirements: low cost, low complexity, a certain degree of coverage enhancement, and power saving.

Since the current NR interface is designed for high-end terminals such as high speed and low delay, the current design may not satisfy the above-mentioned requirements of NR-lite. Therefore, the current NR system needs to be modified to satisfy the requirements of NR-lite. For example, in order to satisfy the requirements of low cost and low complexity, the radio frequency (RF) bandwidth of NR-lite can be limited, for example, 10MHz or 20MHz.

The basic component unit of a PDCCH in NR is a resource element group (REG), in which one REG corresponds to a size of a physical resource block (PRB) in the frequency domain (12 resource elements (RE)) and a size of an orthogonal frequency division multiplexing (OFDM) symbol in the time domain. 6 REGs will form a CCE. In the current NR system, the PDCCH can include 1, 2, 4, 8, or 16 CCEs. Herein the number of CCEs contained in the PDCCH may be called as the aggregation level (AL). When the information bits of the PDCCH are fixed, the AL is determined by channel conditions. When the user's channel conditions are better, a smaller AL can be used. When the channel conditions are poor, a larger AL is selected.

For NR-lite users, due to the shortened terminal bandwidth, the maximum CCE AL supported is limited. Specifically, as shown in Table 1 and Table 2 below, when the terminal bandwidth is 10 MHz and 20 MHz, respectively, the AL, which is a control resource set (CORESET) may be as follows.

Table 1:

| Terminal broadband UE BW=1 0MHz | | | |
|---|---|---|---|
| CORESET subcarrier spacing | OFDM symbol | | |
| | 1 | 2 | 3 |
| 15kHz | 8CCE | 16 CCE | 24 CCE |
| 30kHz | 4 CCE | 8 CCE | 12CCE |
| 60kHz | 2 CCE | 4 CCE | 6 CCE |

Table 2:

| Terminal broadband UE BW=20MHz | | | |
|---|---|---|---|
| CORESET subcarrier spacing | OFDM symbol | | |
| | 1 | 2 | 3 |
| 15kHz | 16 CCE | 32 CCE | 48 CCE |
| 30kHz | 8 CCE | 16 CCE | 24 CCE |
| 60kHz | 4 CCE | 6 CCE | 12 CCE |

For NR-lite users, due to limited functions, the terminal bandwidth is relatively shorter, or for example, the reception antennas are reduced or the like, resulting in lower channel conditions compared with the normal NR. The required AL is higher than that of the normal NR UE. Then in some configurations, the AL of the PDCCH supported by NR-lite users is relatively smaller. At the same time, in many cases, the maximum number of CCEs supported by NR-lite users is not the AL supported by the current NR PDCCH (for example, 1, 2, 4, 8, 16). If only the AL supported by the NR PDCCH is supported, it will further bring about loss of coverage. For example, when the LTE BW=10MHz, the subcarrier spacing is 30kHz, and the OFDM symbol=3, the maximum AL of CCEs supported is 12 CCEs. However, the AL 12 is not supported by the current NR PDCCH, so for NR-lite users at this time, the maximum CCE AL available is 8. Then the coverage that the PDCCH can reach will be reduced.

A method, an apparatus, a device and a storage medium for configuring a PDCCH provided by embodiments of the disclosure are intended to solve the above technical problems in the prior art.

The technical solutions of embodiments of the disclosure and how the technical solutions of embodiments of the disclosure solve the above technical problems will be described in detail below with specific embodiments. The following embodiments can be combined with each other, and the same or similar concepts or processes may not be repeated in some embodiments. The embodiments of the disclosure will be described below with reference to the accompanying drawings as follows.

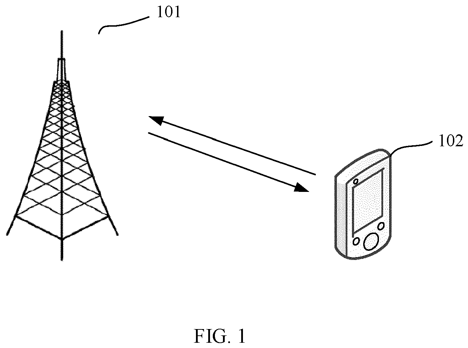

The method for configuring a PDCCH provided by embodiment of the disclosure can be applied to the environment as shown in FIG. 1. FIG. 1 includes a base station 101 and a UE 102. The LTE is connected to the base station. The base station 101 determines the subset of ALs from the set of ALs; the base station sends configuration information of the subset of ALs to the LTE 102, and the UE 102 determines its PDCCH resources based on the configuration information, that is, the AL of the PDCCH that the LTE 102 can use.

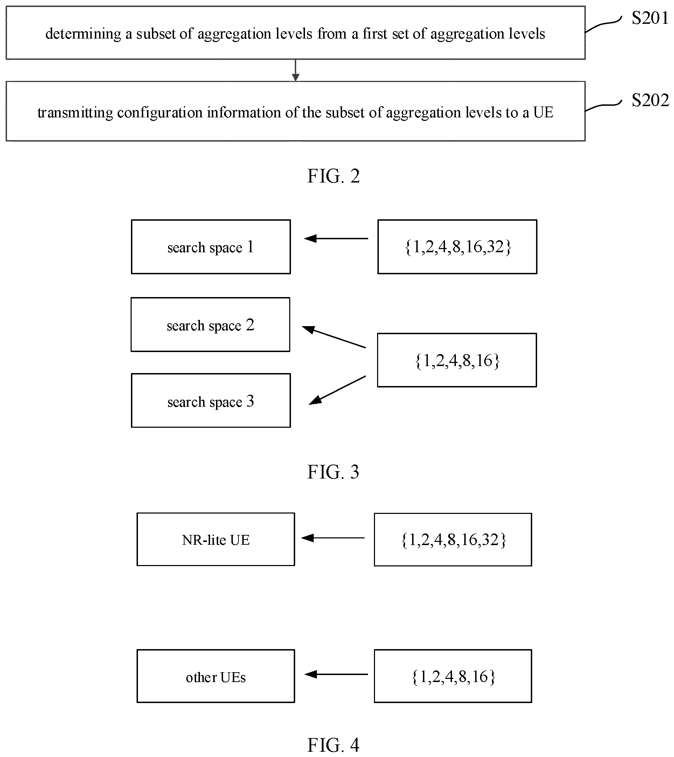

Embodiments of the disclosure provide a possible implementation. As shown in FIG. 2, a method for configuring a PDCCH is provided. The method is applied to the base station in FIG. 1 as an example for description, which may include the following steps.

In step S201, a subset of ALs is determined from a first set of ALs.

In step S202, configuration information of the subset of ALs is sent to a UE, in which the first set of ALs is a complete set of ALs configured for a first-type LTE, a second set of ALs is a complete set of ALs configured for a second-type UE; and ALs in the first set of ALs are not the same or not completely the same as ALs in the second set of ALs.

In some embodiments of the disclosure, the subset of ALs includes one or more ALs.

Sending the configuration information to the UE may be: the base station sending a value of a configuration information parameter to the UE through a signaling; or, the base station sending an identity corresponding to the configuration information parameter to the UE, where the base station and the LTE have the same correspondence relationship between configuration information parameters and identities, and the correspondence relationship between configuration information parameters and identities can be specified in the protocol or sent by the base station to the LTE; or, the base station sending one or more sub-parameters of determining the value of the configuration information parameter, and the LTE calculating the value of the configuration information parameter through the one or more sub-parameters.

The second set of ALs is a set of ALs {1,2,4,8,16} specified by the current protocol.

The first set of ALs includes multiple ALs, and at least one AL in the multiple ALs in the first set of ALs is different from the multiple ALs in the second set of ALs. The first set of ALs in embodiments of the disclosure includes at least one AL which is not any one of 1, 2, 4, 8, and 16.

Some embodiments of the disclosure extend the ALs determined by the current protocol, so that the extended ALs can better support various different types of UEs.

In some embodiments, at least one AL may be determined from the first set of ALs to form the subset of ALs.

In some embodiments, the base station sends the configuration information of the subset of ALs to the UE, and the LTE determines its PDCCH resources according to the received configuration information, that is, the AL of the PDCCH that the UE can use.

In the above embodiments, by expanding the set of ALs in the current protocol and adding at least one candidate AL, the expanded set of ALs can better match the characteristics of the first-type LTE and provide the better coverage.

Some embodiments of the disclosure provide a possible implementation manner. A capability of the first-type LTE is different from a capability of the second-type UE; and/or the first-type LTE and the second-type UE have different network requirements.

For example, the first-type UE is an NR-lite LTE; the second-type LTE is the same or different from the first-type UE; for example, the second-type UE may be an NR LTE.

In some embodiments of the disclosure, a number of ALs in the first set of ALs is greater than a number of ALs in the second set of ALs.

That is to say, in the first set of ALs, in addition to 1, 2, 4, 8, 16 in the second set of ALs, there may also be one or more other different ALs.

Some embodiments of the disclosure provide a possible implementation manner. The second set of ALs is a subset of the first set of ALs.

The second set of ALs is the subset of the first set of ALs, that is, any AL in the second set of ALs belongs to the first set of ALs.

In some embodiments, the ALs included in the second set of ALs are the same as the ALs included in the first set of ALs. For example, the ALs included in the second set of ALs are 1, 2, 4, 8, 16, 32, and the ALs included in the first set of ALs are also 1, 2, 4, 8, 16, 32. In some embodiments, the ALs included in the second set of ALs are a true subset of the ALs included in the first set of ALs, that is, the first set of ALs includes all ALs in the second set of ALs, and the first set of ALs also includes ALs that the second set of ALs does not have. For example, the ALs included in the second set of ALs are 1, 2, 4, 8, 16, and the ALs included in the first set of ALs are 1, 2, 4, 8, 16, and 32. That is, based on the second set of ALs, the first set of ALs is added with one or more ALs that are not included in the second set of ALs.

Some embodiments of the disclosure provide a possible implementation manner. The number of ALs included in the set of ALs is not less than five.

In some embodiments, for example, for the NR system, the existing set of ALs is {1,2,4,8,16}, and the number of ALs included in the first set of ALs in the disclosure is greater than 5. That is, in the first set of ALs in the disclosure, on the basis of the five ALs {1,2,4,8,16}, one or more those are all different from the ALs in the current protocol can be added (included).

Several specific implementations for expanding the set of ALs will be further elaborated below in conjunction with specific implementations. Of course, these specific implementations are only examples of embodiments of the disclosure, and should not be considered as limiting the protection scope of embodiments of the disclosure.

Manner 1: a maximum AL in the first set of ALs is greater than a maximum AL in the second set of ALs.

That is, the maximum AL in the first set of ALs is greater than 16.

In some embodiments, the maximum AL in the first set of ALs is greater than 16, that is, the newly added AL that is different from the ALs in the second set of ALs is greater than 16.

In some embodiments, it is assumed that the newly added AL is 32, that is, the first set of ALs in the disclosure is {1,2,4,8,16,32}. If the second set of ALs of the current protocol is adopted, the maximum available AL is 16, and the LTE with relatively poor channel conditions may support the AL of 8; while the first set of ALs of the disclosure is adopted, the maximum available AL is 32, and the UE with relatively poor channel conditions may support the AL of 16, which can effectively improve the coverage that the PDCCH can reach and improve the flexibility of the entire system.

Some embodiments of the disclosure provide a possible implementation manner. A maximum AL in the set of ALs is a $n^{th}$ power of 2, where n is a positive integer greater than or equal to 5.

In some embodiments, the supported larger CCE AL needs to satisfy certain conditions, for example, it may be a $n^{th}$ power of 2, where n is a positive integer greater than or equal to 5, for example, it may be 32.

Manner 2: the first set of ALs includes at least one AL that is different from any AL in the second set of ALs, and the different AL is less than a maximum AL in the second set of ALs.

That is, the ALs less than 16 in the second set of ALs are 1, 2, 4, and 8, and the number of ALs less than 16 in the first set of ALs is not less than 4.

In some embodiments, in the existing set of ALs, the ALs less than 16 are four of 1, 2, 4, and 8. The number of ALs less than 16 in the set of ALs in some embodiments of the disclosure is greater than a second preset value, and the second preset value is not less than 4, that is, at least one new AL is added to the set of ALs in some embodiments of the disclosure compared to the prior art, and the newly added AL is less than 16, for example 10, 12, 14 or the like. That is, some embodiments of the disclosure provide a possible implementation manner. The first set of ALs includes 2n ALs, where n is a positive integer greater than or equal to 5.

In some embodiments, it is assumed that the newly added AL is 12, that is, the first set of ALs in the disclosure is {1,2,4,8,12,16}. If the second set of ALs {1,2,4,8,16} of the current protocol is used, and the maximum AL available is 16, the LTE with relatively poor channel conditions may support the AL of 8. For the first set of ALs {1,2,4,8,12,16} in some embodiments of the disclosure, if the maximum available AL is 16, the UE with relatively poor channel conditions may support the AL of 12, which effectively improve the coverage that the PDCCH can reach and improve the flexibility of the entire system.

Of course, the added AL less than 16 can be interpolated at any position of the second set of ALs {1,2,4,8,16} of the current protocol. For example, if the newly added AL is 6, the first set of ALs may be {1,2,4,6,8,16}; for another example, if the newly added AL is 10, the first set of ALs in some embodiments of the disclosure may be {1,2,4,8,10,12,16}; for still another example, if the newly added AL is 14, the first set of ALs in some embodiments of the disclosure may be {1,2,4,8,14,16}. Of course, the added AL can be one or more, that is, a 2×n sequence is formed as the ALs, where n is any positive integer greater than 1, and the sequence may be continuous or non-continuous.

In the above embodiments, if the AL in the first set of ALs that is different from that in the second set of ALs of the current protocol is greater than 16, the maximum AL in the subset of ALs available to the LTE also increases, and the coverage that the PDCCH can reach will increase; if the AL in the first set of ALs that is different from that in the second set of ALs of the current protocol is smaller than 16, the supportable AL is added for the UE, and the relative available AL also increases, the coverage that the PDCCH can reach will increase.

Manner 3: a maximum AL in the first set of ALs is greater than 16, and the number of ALs less than 16 in the set of ALs is not less than 4.

For example, if the ALs that are different from the ALs in the second set of ALs of the current protocol can be M, N, the first set of ALs in some embodiments of the disclosure is {1,2,4,8,M,16,N}; where M can be $2 \times p$, $p$=5, 6, 7; that is, M can be any of 10, 12, and 14, for example, it can be 12; N can be $2 \times q$, and $q$ is a positive integer value not less than 9, that is, N is any one of 18, 20, 22, 24, 26, 28, 30, 32..., for example, it can be 32. In this manner, the base station can directly select the subset of ALs from the first set of ALs for configuration. For example, {8,M,16} is configured, and the LTE can obtain the ALs by reading the signaling.

For another example, the first set of ALs in the disclosure is $\{1,2,4,8,M_1,M_2...M_P,16,N_1,N_2,...N_Q\}$. In some embodiments, the respective values of $M_1,M_2...M_P$ can be any of 10, 12, and 14; and the respective values of $N_1,N_2,...N_Q$ can be any of $2 \times q$, where q is a positive integer value not less than 9, that is, each value of $N_1,N_2,...N_Q$ can be any of 18, 20, 22, 24, 26, 28, 30, 32... $2 \times q$.

Of course, there can be one or more ALs less than 16 and more than 16. The added AL(s) less than 16 and more than 16, can be any value of $2 \times n$. In some embodiments, the first set of ALs may have multiple forms. For example, the first set of ALs may be {1,2,...,2×n}; where n is a positive integer not less than 1. For another example, the first set of ALs can be {1,2,...,2"}; where n is a positive integer not less than 1. The value of n is a continuous positive integer, or the value of n is a non-continuous positive integer.

In some embodiments, the first set of ALs is {1,2,4,8,16,32}; or {1,2,4,8,12,16,32}; or {1,2,4,8,16,24,32}; or {1,2,4,8,16,24}; or {1,2,4,8,12,16,24,32}; or is {1,2,4,8,12,16}.

In the following, the manner for determining the AL included in the set of ALs that is different from the AL in the prior art will be described with reference to specific embodiments.

Some embodiments of the disclosure provide a possible implementation manner. The first set of ALs includes a first target AL, and the first target AL is determined based on a number of resources in a control resource set of the UE.

In some embodiments, the base station may obtain configuration information of a control resource set of the UE, determine a first AL supported by the LTE based on the configuration information, determine a second AL, and use a smaller one of the first AL and the second AL as the first target AL. The base station does not directly send the determined first target AL to the UE. If the subset of ALs includes the first target AL, the base station sends the subset of ALs to the LTE, and the LTE calculates the value of the first target AL.

In some embodiments of the disclosure, the subset of ALs includes the first target AL, and the first target AL is determined by: (1) obtaining configuration information of a control resource set of the LTE; (2) determining a first AL supported by the LTE based on the configuration information of the control resource set; (3) determining a second AL;

(4) using the smaller one of the first AL and the second AL as the first target AL.

In some embodiments of the disclosure, determining the second AL includes: a, receiving indication information from the base station, and determining the second AL according to the indication information, or b, determining a maximum AL in the first set of ALs except the first target AL as the second AL.

In some embodiments, the first AL AL_resource may be the maximum CCE AL corresponding to the current control resource set or the maximum CCE AL that satisfies the certain condition under the currently configured control resource set, and the restriction condition may be that the maximum CCE AL needs to be an integer multiple of a certain value or an integer power of a certain value.

For example, under the configuration information of a certain control resource set, the maximum CCE AL supported is 11 CCEs, but the protocol stipulates that the CCE AL in the system needs to be an integer multiple of 2, then the first AL AL_resource may be 10.

The second AL AL_max may be the maximum CCE AL that can be supported by both the base station and the UE.

The following formula can be used to calculate AL_extra:

$$AL\_extra=\min (AL\_resource, AL\_max) \qquad (1)$$

In this case, when the base station can configure the available CCE AL, a subset can be selected from {1,2,4,8,16,AL_extra}, that is, the set of ALs is {1,2,4,8 ,16,AL_extra}.

When AL_extra is configured, that is, when AL_extra is included in the subset of ALs, the base station calculates AL_extra and then configures it.

In some embodiments, the first set of ALs is configured for a user-specific search space of the first-type UE.

In some embodiments of the disclosure, different first sets of ALs may be configured for different search spaces. That is, only the specific search space of the first-type UE can be configured based on the first set of ALs, and the common search space may not be configured based on the first set of ALs.

As shown in FIG. 3, in an example, the designated search space of the UE is search space 1, and the common search space includes search space 2 and search space 3. The first set of ALs provided by the disclosure can be used for search space 1. The second set of ALs of the current protocol {1,2,4,8,16} can be used for search space 2 and search space 3. The first set of ALs of embodiments of the disclosure may be {1,2,4,8,16,32} as an example.

In some embodiments of the disclosure, the specific search space of the first-type UE and/or the common search space of the specified type may be configured based on the first set of ALs.

In another implementation manner, the first set of ALs of embodiments of the disclosure may be used for a common search space, but the common search space is used for the designated first-type UE.

In some embodiments of the disclosure, before selecting the subset of ALs from the first set of ALs in step S201, it may further include: determining that the LTE is the first-type UE.

In some embodiments of the disclosure, in response to the common search space being only for the first-type LTE, the first set of ALs of embodiments of the disclosure may be used for the common search space. In some embodiments, the first-type UE may be the NR-lite UE.

For example, the common search space includes search space 1, search space 2, and search space 3. The designated common search space is search space 1, and the set of ALs provided by some embodiments of the disclosure can be used for search space 1. The first set of ALs of embodiments of the disclosure can be {1,2,4,8,16,32} for an example.

In some embodiments, the designated common search space may be a common search space used by a designated type of LTE.

For example, as shown in FIG. 4, the common search space is only configured for the NR-lite UE. At this time, the base station can configure the NR-lite LTE with the set of ALs provided in some embodiments of the disclosure.

For example, when the base station clearly indicates that the type 0, 0A, type 1, and type 2, common search space does not allow other non-NR-lite UEs to use it, only the NR-lite UE is allowed to use it. Then, at this time, the NR-lite UE can use the set of ALs provided by some embodiments of the disclosure by default, for example, the set of ALs {1,2,4,8,16,32} can be used.

In some embodiments of the disclosure, the first set of ALs includes at least one AL that is different from any AL in the second set of ALs; the different AL is configured for the user-specific search space of the first-type LTE, and/or the different AL is configured for a designated common search space used by the first-type UE.

In some embodiments, it may also be the AL in the first set of ALs that is different from that in the second set of ALs, which is used for the user-specific search space and/or the designated common search space of the first-type LTE, that is, for the same ALs in the first set of ALs and the second set of ALs may not be limited, but the AL in the first set of ALs which is different from that in the second set of ALs is used for the first-type LTE.

The above illustrates the usage scenarios of ALs that are different from the prior art.

In some embodiment of the disclosure, a possible implementation is provided, and the method for configuring a PDCCH may further include: configuring a subcarrier spacing used by a downlink control channel of the LTE; in which the subcarrier spacing used by the downlink control channel is less than a first specified threshold; and/or, a number of orthogonal frequency division multiplexing symbols occupied by a downlink control resource set is greater than a second specified threshold; and/or, a bandwidth occupied by the downlink control resource set is greater than a third specified threshold. For example, the first specified threshold may be a larger subcarrier spacing, such as 60kHz; the second specified threshold may be a smaller number of orthogonal frequency division multiplexing symbols, for example, the number of 1OFDM symbols; and the third specified threshold may be a smaller bandwidth, such as 10MHz.

In some embodiments, for those configurations that provide a smaller AL, the base station may be restricted from configuring these parameters for these users, that is, the base station does not allow the UE to use these configurations. For example, the base station is not allowed to configure a subcarrier spacing greater than 60kHz for the user.

In the foregoing method for configuring a PDCCH, the base station determines the subset of ALs from the first set of ALs, and sends the configuration information of the subset of ALs to the UE, and the elements in the first set of ALs are different from the elements in the second set of ALs. The elements in the first set of ALs can better match the characteristics of the first-type LTE and provide better coverage.

In some embodiments, if the AL(s) in the first set of ALs that are different from those in the second set of ALs of the current protocol are greater than 16, the maximum AL in the subset of ALs available to the LTE also increases, and the coverage that the PDCCH can reach may increase. In some embodiments, if the AL(s) that are different from the second set of ALs of the current protocol are smaller than 16, for the LTE, a supportable AL is added, the relative available AL may also increase, and the coverage that PDCCH can reach may increase.

In some embodiments of the disclosure, a method for configuring a PDCCH is provided, which can be applied to the UE and may include: receiving configuration information of a subset of ALs from a base station; in which, the subset of ALs is determined by the base station from a first set of AL; the first set of ALs is a complete set of ALs configured for a first-type UE; a second set of ALs is a complete set of ALs configured for a second-type UE; and ALs in the first set of ALs are not the same or not completely the same as ALs in the second set of ALs.

In some embodiments, the AL may be a fixed preset AL.

In some embodiments of the disclosure, the subset of ALs includes one or more ALs.

Receiving the configuration information of the subset of ALs from the base station may be: receiving a value of a configuration information parameter from the base station through the signaling; or, receiving an identity corresponding to the configuration information parameter from the base station, where the base station and the UE have the same correspondence relationship between configuration information parameters and identities, and the correspondence relationship between configuration information parameters and identities can be specified in the protocol or sent by the base station to the LTE; or, receiving one or more sub-parameters of determining the value of the configuration information parameter from the base station, and the LTE calculating the value of the configuration information parameter through the one or more sub-parameters.

In some embodiments, the second set of ALs is a set of ALs {1,2,4,8,16} specified by the current protocol.

In some embodiments, the first set of ALs includes multiple ALs, and at least one AL in the multiple ALs in the first set of ALs is different from the multiple ALs in the second set of ALs. The first set of ALs in embodiments of the disclosure includes at least one AL which is not any one of 1, 2, 4, 8, and 16.

Some embodiments of the disclosure extend the ALs determined by the current protocol, so that the extended ALs can better support various different types of UEs.

In some embodiments, the base station may determine at least one AL from the first set of ALs to form the subset of ALs, and send it to the LTE.

In some embodiments, after the UE receives the configuration information of the subset of ALs, it determines its PDCCH resources according to the received configuration information, that is, the AL of the PDCCH that the LTE can use.

In the above embodiments, by expanding the set of ALs in the current protocol and adding at least one candidate AL, the expanded set of ALs can better match the characteristics of the first-type LTE and provide the better coverage.

In some embodiments of the disclosure, a capability of the first-type LTE is different from a capability of the second-type LTE; and/or the first-type UE and the second-type UE have different network requirements.

For example, the first-type UE is an NR-lite LTE; the second-type LTE is the same or different from the first-type UE; for example, the second-type UE may be an NR LTE.

In some embodiments of the disclosure, a number of ALs in the first set of ALs is greater than a number of ALs in the second set of ALs.

That is to say, in the first set of ALs, in addition to 1, 2, 4, 8, 16 in the second set of ALs, there may also be one or more other different ALs.

In some embodiments of the disclosure, ALs included in the second set of ALs are a subset of ALs included in the first set of ALs. In some embodiments, the ALs included in the second set of ALs are the same as the ALs included in the first set of ALs. For example, the ALs included in the second set of ALs are 1, 2, 4, 8, 16, 32, and the ALs included in the first set of ALs are also 1, 2, 4, 8, 16, 32. In some embodiments, the ALs included in the second set of ALs are a true subset of the ALs included in the first set of ALs, that is, the first set of ALs includes all ALs in the second set of ALs, and the first set of ALs also includes ALs that the second set of ALs does not have. For example, the ALs included in the second set of ALs are 1, 2, 4, 8, 16, and the ALs included in the first set of ALs are 1, 2, 4, 8, 16, and 32. That is, based on the second set of ALs, the first set of ALs is added with one or more ALs that are not included in the second set of ALs.

Some embodiments of the disclosure provide a possible implementation manner. The number of ALs included in the set of ALs is not less than five.

In some embodiments, for example, for the NR system, the existing set of ALs is {1,2,4,8,16}, and the number of ALs included in the first set of ALs in the disclosure is greater than 5. That is, in the first set of ALs in the disclosure, on the basis of the five ALs {1,2,4,8,16}, one or more those are all different from the ALs in the current protocol can be added (included).

In some embodiments of the disclosure, the first set of ALs and the second set of ALs may be the same as manner 1, manner 2, and manner 3 in the foregoing embodiments, and will not be repeated herein.

In some embodiments, the AL may be set based on configuration information of a control resource set of the LTE.

In some embodiments of the disclosure, the subset of ALs includes the first target AL, and the first target AL is determined by: (1) obtaining configuration information of a control resource set of the LTE; (2) determining a first AL supported by the LTE based on the configuration information of the control resource set; (3) determining a second AL; (4) using the smaller one of the first AL and the second AL as the first target AL.

In some embodiments of the disclosure, determining the second AL includes: a, receiving indication information from the base station, and determining the second AL according to the indication information, or b, determining a maximum AL in the first set of ALs except the first target AL as the second AL.

In some embodiments, the first AL AL_resource may be the maximum CCE AL corresponding to the current control resource set or the maximum CCE AL that satisfies the certain condition under the currently configured control resource set, and the restriction condition may be that the maximum CCE AL needs to be an integer multiple of a certain value or an integer power of a certain value.

For example, under the configuration information of a certain control resource set, the maximum CCE AL supported is 11 CCEs, but the protocol stipulates that the CCE AL in the system needs to be an integer multiple of 2, then the first AL AL_resource may be 10.

The second AL AL_max may be the maximum CCE AL that can be supported by both the base station and the UE.

The following formula can be used to calculate AL_extra:

$$AL\_extra = \min(AL\_resource, AL\_max) \qquad (1)$$

In this case, when the base station can configure the available CCE AL, a subset can be selected from {1,2,4,8,16,AL_extra}, that is, the set of ALs is {1,2,4,8,16,AL_extra}.

When AL_extra is configured, that is, when AL_extra is included in the subset of ALs, the base station calculates AL_extra and then configures it.

In some embodiments, the first set of ALs is configured for a user-specific search space of the first-type UE.

In some embodiments of the disclosure, the base station may configure different first set of ALs for different search spaces. That is, only the specific search space of the first-type UE can be configured based on the first set of ALs, and the common search space may not be configured based on the first set of ALs. Similar to some embodiments of the disclosure shown in FIG. 3, the LTE can perform corresponding operations according to the set of ALs of the search space configuration determined by the base station, which will not be repeated herein.

In some embodiments, the first set of ALs includes at least one AL that is different from any AL in the second set of ALs; the different AL is configured for the user-specific search space of the first-type LTE, and/or the different AL is configured for a designated common search space used by the first-type UE.

In the foregoing method for configuring a PDCCH, the base station determines the subset of ALs from the first set of ALs, and sends the configuration information of the subset of ALs to the UE, and the elements in the first set of ALs are different from the elements in the second set of ALs. The elements in the first set of ALs can better match the characteristics of the first-type LTE and provide better coverage.

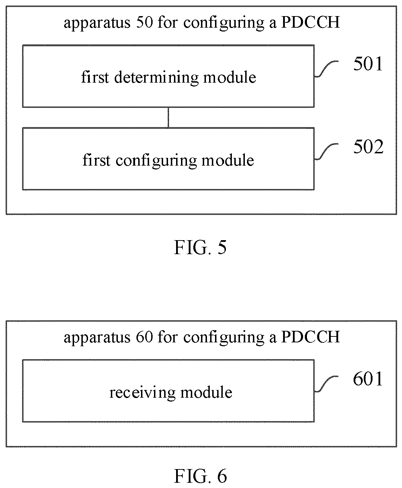

A possible implementation manner is provided in some embodiments of the disclosure. As shown in FIG. 5, an apparatus 50 for configuring a PDCCH is provided. The apparatus 50 may be a base station. The apparatus 50 may include: a first determining module 501 and a first configuring module 502.

The first determining module 501 is configured to determine a subset of ALs from a first set of ALs.

The first configuring module 502 is configured to transmit configuration information of the subset of ALs to a LTE; in which the first set of ALs is a complete set of ALs configured for a first-type UE, a second set of ALs is a complete set of ALs configured for a second-type LTE; and ALs in the first set of ALs are not the same or not completely the same as ALs in the second set of ALs.

Some embodiments of the disclosure provide a possible implementation. In some optional embodiments of the third aspect, a number of ALs in the first set of ALs is greater than a number of ALs in the second set of ALs.

Some embodiments of the disclosure provide a possible implementation manner. The second set of ALs is a subset of the first set of ALs.

Some embodiments of the disclosure provide a possible implementation manner. A maximum AL in the first set of ALs is greater than a maximum AL in the second set of ALs.

Some embodiments of the disclosure provide a possible implementation manner. The first set of ALs includes at least one AL that is different from any AL in the second set of ALs, and the different AL is less than a maximum AL in the second set of ALs.

Some embodiments of the disclosure provide a possible implementation manner. The first set of ALs includes a first target AL, and the first target AL is determined based on a number of resources in a control resource set of the UE.

Some embodiments of the disclosure provide a possible implementation manner. The apparatus 50 further includes: a second determining module, configured to determine that the LTE is the first-type LTE.

Some embodiments of the disclosure provide a possible implementation manner. The first set of ALs is configured for a user-specific search space of the first-type LTE.

Some embodiments of the disclosure provide a possible implementation manner. The first set of ALs includes at least one AL that is different from any AL in the second set of ALs; the different AL is configured for the user-specific search space of the first-type UE, and/or the different AL is configured for a designated common search space used by the first-type UE.

Some embodiments of the disclosure provide a possible implementation manner. The apparatus 50 further includes: a second configuring module, configured to configure a subcarrier spacing used by a downlink control channel of the LTE; in which the subcarrier spacing used by the downlink control channel is less than a first specified threshold; and/or, a number of orthogonal frequency division multiplexing symbols occupied by a downlink control resource set is greater than a second specified threshold; and/or, a bandwidth occupied by the downlink control resource set is greater than a third specified threshold.

Some embodiments of the disclosure provide a possible implementation manner. A capability of the first-type LTE is different with a capability of the second-type UE; and/or the first-type LTE and the second-type UE have different network requirements.

Some embodiments of the disclosure provide a possible implementation manner. A maximum AL in the first set of ALs is a $n^{th}$ power of 2, where n is a positive integer greater than or equal to 5.

Some embodiments of the disclosure provide a possible implementation manner. ALs in the first set of ALs are {1,2,4,8,16,32}; or, ALs in the first set of ALs are {1,2,4,8,12,16,32}; or, ALs in the first set of ALs are {1,2,4,8,16,24,32}; or, ALs in the first set ofALs are {1,2,4,8,16,24}; or, ALs in the first set of ALs are {1,2,4,8,12,16,24,32}; or, ALs in the first set of ALs are {1,2,4,8,12,16}.

In the foregoing method for configuring a PDCCH, the base station determines the subset of ALs from the first set of ALs, and sends the configuration information of the subset of ALs to the UE, and the elements in the first set of ALs are different from the elements in the second set of ALs. The elements in the first set of ALs can better match the characteristics of the first-type LTE and provide better coverage.

A possible implementation manner is provided in some embodiments of the disclosure. As shown in FIG. 6, an apparatus 60 for configuring a PDCCH is provided. The apparatus 60 may be a LTE. The apparatus 60 includes a receiving module 601.

The receiving module 601 is configured to receive configuration information of a subset of ALs from a base station; in which, the subset of ALs is determined by the base station from a first set of ALs; the first set of ALs is a complete set of ALs configured for a first-type LTE; a second set of ALs is a complete set of ALs configured for a second-type LTE; and ALs in the first set of ALs are not the same or not completely the same as ALs in the second set of ALs.

Some embodiments of the disclosure provide a possible implementation method. The subset of ALs includes a first target AL and the apparatus 60 further includes an obtaining module configured to obtain configuration information of a control resource set; determine a first AL supported by the UE based on the configuration information of the control resource set; determine a second AL; and use a smaller one of the first AL and the second AL as the first target AL.

Some embodiments of the disclosure provide a possible implementation method. When the obtaining module determines the second AL, the obtaining module is configured to receive indication information from the base station, and determine the second AL according to the indication information; or, determining a maximum AL in the first set of ALs except the first target AL as the second AL.

The apparatus for configuring a PDCCH in embodiments of the disclosure can execute the method for configuring a PDCCH in embodiments of the disclosure. The implementation principle is similar. The actions performed by the modules in the apparatus for configuring a PDCCH in embodiments of the disclosure correspond to the steps in the method for configuring a PDCCH in embodiments of the disclosure. For the detailed functional description of each module of the apparatus for configuring a PDCCH, reference should be made to the description of the method for configuring a PDCCH in the foregoing, and will not be repeated herein.

Based on the same principle as the method shown in embodiments of the disclosure, an electronic device is also provided in embodiments of the disclosure. The electronic device may include, but is not limited to a processor and a memory; in which a memory is configured to store a computer operation instruction; and the processor is configured to execute the method for configuring a PDCCH shown in embodiments by invoking the computer operation instruction. Compared with the prior art, the method for configuring the PDCCH in embodiments of the disclosure can increase the coverage that can be achieved by the PDCCH.

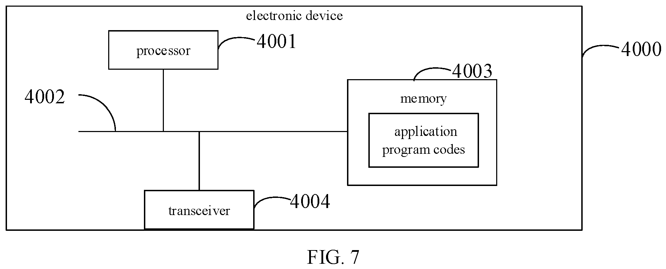

In an optional embodiment, an electronic device is provided. As shown in FIG. 7, the electronic device 4000 shown in FIG. 7 includes a processor 4001 and a memory 4003. The processor 4001 and the memory 4003 are connected, for example, connected through a bus 4002. Optionally, the electronic device 4000 may further include a transceiver 4004. It should be noted that in actual applications, the transceiver 4004 is not limited to one, and the structure of the electronic device 4000 does not constitute a limitation to embodiments of the disclosure.

The processor 4001 may be a central processing unit (CPU), a general-purpose processor, a digital signal processor (DSP), an application specific integrated circuit (ASIC), a field programmable gate array (FPGA) or other programmable logic device, a transistor logic device, a hardware component, or any combination thereof. It can implement or execute various exemplary logical blocks, modules, and circuits described in conjunction with embodiments of the disclosure. The processor 4001 may also be a combination for realizing computing functions, for example, including a combination of one or more microprocessors, a combination of a DSP and a microprocessor, or the like.

The bus 4002 may include a path for transferring information among the above-mentioned components. The bus 4002 may be a peripheral component interconnect (PCI) bus or an extended industry standard architecture (EISA) bus or the like. The bus 4002 can be divided into an address bus, a data bus, a control bus, or the like. For ease of representation, only one thick line is used in FIG. 9, but it does not mean that there is only one bus or one type of bus.

The memory 4003 may be a read only memory (ROM) or other types of static storage devices that can store static information and instructions, a random access memory (RAM) or other types of dynamic storage devices that can store information and instructions, an electrically erasable programmable read only memory (EEPROM), a compact disc read only memory (CD-ROM) or other optical disk storage, an optical disk storage (including compressed optical discs, laser discs, optical discs, digital universal discs, Blu-ray discs, etc.), a magnetic disk storage medium or other magnetic storage devices, or any other medium that can be used to carry or store desired program codes in the form of instructions or data structures and can be accessed by a computer, but not limited to this.

The memory 4003 is used to store application program codes for executing solutions of embodiments of the disclosure, and application program codes are controlled by the processor 4001 to execute. The processor 4001 is configured to execute the application program code stored in the memory 4003 to implement the content shown in the foregoing method embodiments.

The electronic device includes but is not limited to: a mobile terminal such as a mobile phone, a notebook computer, a digital broadcast receiver, a personal digital assistant (PDA), a tablet computer (PAD), a portable multimedia player (PMP), a vehicle terminal (such as a vehicle navigation terminal) or the like, and a fixed terminal such as a digital TV or a desktop computer. The electronic device shown in FIG. 7 is only an example, and should not bring any limitation to the function and scope of embodiments of the disclosure.

Some embodiments of the disclosure provide a computer-readable storage medium with a computer program stored on the computer-readable storage medium, and when the computer program runs on a computer, the computer can execute the corresponding content in the foregoing method embodiments. Compared with the prior art, the method for configuring a PDCCH in some embodiments of the disclosure can increase the coverage that can be achieved by the PDCCH.

It should be understood that although various steps in flowcharts of drawings are displayed in sequence as indicated by arrows, these steps are not necessarily performed in sequence in an order indicated by the arrows. Unless explicitly stated in the disclosure, the execution of these steps is not strictly limited in the order, and they can be executed in other orders. Moreover, at least part of the steps in flowcharts of drawings may include multiple sub-steps or multiple stages. These sub-steps or stages are not necessarily executed at the same time, but can be executed at different moments. The execution order is not necessarily sequential, but they may be performed alternately or alternately with at least a part of other steps or sub-steps or stages of other steps.

It should be noted that the aforementioned computer-readable medium in the disclosure may be a computer-readable signal medium or a computer-readable storage medium, or any combination thereof. The computer-readable storage medium may be, for example, but not limited to, an electrical, magnetic, optical, electromagnetic, infrared, or semiconductor system, device, or apparatus, or a combination thereof. A more specific example of the computer-readable storage medium may include, but not limited to: an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the disclosure, the computer-readable storage medium may be any tangible medium that contains or stores a program, and the program may be used by or in combination with an instruction execution system, apparatus, or device. In the disclosure, the computer-readable signal medium may include a data signal propagated in a baseband or as a part of a carrier wave, and a computer-readable program code is carried therein. This propagated data signal can take many forms, including but not limited to electromagnetic signals, optical signals, or any suitable combination thereof. The computer-readable signal medium may also be any computer-readable medium other than the computer-readable storage medium. The computer-readable signal medium may send, propagate, or transmit the program for use by or in combination with the instruction execution system, apparatus, or device. The program code contained on the computer-readable medium can be transmitted by any suitable medium, including but not limited to: wire, optical cable, radio frequency (RF), or the like, or any suitable combination thereof.

The above-mentioned computer-readable medium may be included in the above-mentioned electronic device; or it may exist alone without being assembled into the electronic device.

The foregoing computer-readable medium carries one or more programs, and when the one or more programs are executed by the electronic device, the electronic device is caused to execute the method shown in the foregoing embodiments.

The computer program code used to perform the operations of the disclosure may be written in one or more programming languages or a combination thereof. The above-mentioned programming languages include object-oriented programming languages, such as Java, Smalltalk, C++, and also conventional procedural programming languages, such as "C" language or similar programming language. The program code can be executed entirely on the user's computer, partly on the user's computer, executed as an independent software package, partly on the user's computer and partly executed on a remote computer, or entirely executed on the remote computer or server. In the case of the remote computer, the remote computer can be connected to the user's computer through any kind of network, including a local area network (LAN) or a wide area network (WAN), or it can be connected to an external computer (for example, using an Internet connection provided by an Internet service provider).

The flowcharts and block diagrams in the accompanying drawings illustrate the possible implementation architecture, functions, and operations of the systems, methods, and computer program products according to various embodiments of the disclosure. In this regard, each block in the flowchart or block diagram may represent a module, program segment, or part of codes, and the module, program segment, or part of codes contains one or more executable instructions for realizing the specified logic function. It should also be noted that, in some alternative implementations, the function marked in the block may also occur in a different order from the order marked in the drawing. For example, two blocks shown in succession can actually be executed substantially in parallel, and they can sometimes be executed in the reverse order, depending on the functions involved. It should also be noted that each block in the block diagram and/or flowchart, and a combination of blocks in the block diagram and/or flowchart, can be implemented by a dedicated hardware-based system that performs the specified functions or operations or by a combination of dedicated hardware and computer instructions.

The modules involved in the described embodiments of the disclosure can be implemented in software or hardware. The name of the module does not constitute a limitation on the module itself under certain circumstances. For example, the first determining module can also be described as "a module that determines a subset of ALs."

The above description is only preferred embodiments of the disclosure and an explanation of the applied technical principles. Those skilled in the art should understand that the scope involved in this disclosure is not limited to the technical solutions formed by the specific combination of the above technical features, and should also cover the other technical solutions, without departing from the above disclosed concept, formed by arbitrarily combining the above technical features or the equivalent features. For example, the above-mentioned features and the technical features disclosed in the disclosure (but not limited to) having similar functions are replaced with each other to form the technical solutions.

**Claims**

1. A method for configuring a physical downlink control channel (PDCCH), comprising:

   determining a subset of aggregation levels from a first set of aggregation levels; and
   transmitting configuration information of the subset of aggregation levels to a user equipment (LTE); wherein the first set of aggregation levels is a complete set of aggregation levels configured for a first-type LTE, a second set of aggregation levels is a complete set of aggregation levels configured for a second-type LTE; and aggregation levels in the first set of aggregation levels are not the same or not completely the same as aggregation levels in the second set of aggregation levels.

**2.** The method as claimed in claim 1, wherein a number of aggregation levels in the first set of aggregation levels is greater than a number of aggregation levels in the second set of aggregation levels.

**3.** The method as claimed in claim 1 or 2, wherein the second set of aggregation levels is a subset of the first set of aggregation levels.

**4.** The method as claimed in any one of claims 1 to 3, wherein a maximum aggregation level in the first set of aggregation levels is greater than a maximum aggregation level in the second set of aggregation levels.

**5.** The method as claimed in claim 2 or 3, wherein the first set of aggregation levels comprises at least one aggregation level that is different from any aggregation level in the second set of aggregation levels, and the different aggregation level is less than a maximum aggregation level in the second set of aggregation levels.

**6.** The method as claimed in claim 1, wherein the first set of aggregation levels comprises a first target aggregation level, and the first target aggregation level is determined based on a number of resources in a control resource set of the UE.

**7.** The method as claimed in claim 1, before determining the subset of aggregation levels from the first set of aggregation levels, further comprising:
determining that the LTE is the first-type LTE.

**8.** The method as claimed in claim 1, wherein the first set of aggregation levels is configured for a user-specific search space of the first-type UE.

**9.** The method as claimed in claim 8, wherein the first set of aggregation levels comprises at least one aggregation level that is different from any aggregation level in the second set of aggregation levels;
wherein, the different aggregation level is configured for the user-specific search space of the first-type LTE, and/or the different aggregation level is configured for a designated common search space used by the first-type UE.

**10.** The method as claimed in claim 1, further comprising:

configuring a subcarrier spacing used by a downlink control channel of the LTE;
wherein, the subcarrier spacing used by the downlink control channel is less than a first specified threshold;
and/or,
a number of orthogonal frequency division multiplexing symbols occupied by a downlink control resource set is greater than a second specified threshold;
and/or,
a bandwidth occupied by the downlink control resource set is greater than a third specified threshold.

**11.** The method as claimed in claim 1, wherein a capability of the first-type UE is different from a capability of the second-type UE;
and/or, the first-type LTE and the second-type LTE have different network requirements.

**12.** The method as claimed in claim 1, wherein a maximum aggregation level in the first set of aggregation levels is a $n^{th}$ power of 2, where n is a positive integer greater than or equal to 5.

**13.** The method as claimed in claim 1, wherein,

aggregation levels in the first set of aggregation levels are {1,2,4,8,16,32};
or,
aggregation levels in the first set of aggregation levels are {1,2,4,8,12,16,32};
or,
aggregation levels in the first set of aggregation levels are {1,2,4,8,16,24,32};
or,
aggregation levels in the first set of aggregation levels are {1,2,4,8,16,24};
or,

aggregation levels in the first set of aggregation levels are {1,2,4,8,12,16,24,32};
or,
aggregation levels in the first set of aggregation levels are {1,2,4,8,12,16}.

14. A method for configuring a physical downlink control channel (PDCCH), comprising:

receiving configuration information of a subset of aggregation levels from a base station;
wherein, the subset of aggregation levels is determined by the base station from a first set of aggregation levels;
the first set of aggregation levels is a complete set of aggregation levels configured for a first-type user equipment
(LTE); a second set of aggregation levels is a complete set of aggregation levels configured for a second-type
LTE; and aggregation levels in the first set of aggregation levels are not the same or not completely the same
as aggregation levels in the second set of aggregation levels.

15. The method as claimed in claim 14, wherein the subset of aggregation levels comprises a first target aggregation
level, and the first target aggregation level is determined by:

obtaining configuration information of a control resource set;
determining a first aggregation level supported by the LTE based on the configuration information of the control
resource set;
determining a second aggregation level; and
using a smaller one of the first aggregation level and the second aggregation level as the first target aggregation
level.

16. The method as claimed in claim 15, wherein determining the second aggregation level comprises:

receiving indication information from the base station, and determining the second aggregation level according
to the indication information;
or,
determining a maximum aggregation level in the first set of aggregation levels except the first target aggregation
level as the second aggregation level.

17. An apparatus for configuring a physical downlink control channel (PDCCH), comprising:

a first determining module configured to determine a subset of aggregation levels from a first set of aggregation
levels; and
a first configuring module configured to transmit configuration information of the subset of aggregation levels
to a user equipment (LTE); wherein the first set of aggregation levels is a complete set of aggregation levels
configured for a first-type LTE, a second set of aggregation levels is a complete set of aggregation levels
configured for a second-type UE; and aggregation levels in the first set of aggregation levels are not the same
or not exactly the same as aggregation levels in the second set of aggregation levels.

18. An apparatus for configuring a physical downlink control channel (PDCCH), comprising:

a receiving module configured to receive configuration information of a subset of aggregation levels from a base
station;
wherein, the subset of aggregation levels is determined by the base station from a first set of aggregation levels;
the first set of aggregation levels is a complete set of aggregation levels configured for a first-type user equipment
(UE); a second set of aggregation levels is a complete set of aggregation levels configured for a second-type
LTE; and aggregation levels in the first set of aggregation levels are not the same or not exactly the same as
aggregation levels in the second set of aggregation levels.

19. An electronic device comprising a memory, a processor, and a computer program stored on the memory and capable
of running on the processor, wherein the processor is configured to perform the method for configuring a physical
downlink control channel (PDCCH) as claimed in any one of claims 1-13 when the program is executed, or the
processor is configured to perform the method for configuring a physical downlink control channel (PDCCH) as
claimed in any one of claims 14-17 when the program is executed.

20. A computer-readable storage medium, wherein a computer program is stored on the computer-readable storage medium, and when the program is executed by a processor, the method for configuring a physical downlink control channel (PDCCH) as claimed in any one of claims 1-13 is performed, or when the program is executed by a processor, the method for configuring a physical downlink control channel (PDCCH) as claimed in any one of claims 14-17 is performed.

FIG. 1

| determining a subset of aggregation levels from a first set of aggregation levels | S201 |

↓

| transmitting configuration information of the subset of aggregation levels to a UE | S202 |

FIG. 2

| search space 1 | ← | {1,2,4,8,16,32} |

| search space 2 | ← | {1,2,4,8,16} |
| search space 3 | ← | |

FIG. 3

| NR-lite UE | ← | {1,2,4,8,16,32} |

| other UEs | ← | {1,2,4,8,16} |

FIG. 4

apparatus 50 for configuring a PDCCH

first determining module ⌇ 501

first configuring module ⌇ 502

FIG. 5

apparatus 60 for configuring a PDCCH

receiving module ⌇ 601

FIG. 6

electronic device

processor ⌐4001

4003

4002

memory

application
program codes

transceiver ⌐4004

4000

FIG. 7

## INTERNATIONAL SEARCH REPORT

| International application No. |
|---|
| **PCT/CN2020/084561** |

**A. CLASSIFICATION OF SUBJECT MATTER**

H04W 72/04(2009.01)i; H04L 5/00(2006.01)i

According to International Patent Classification (IPC) or to both national classification and IPC

**B. FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; 3GPP; IETF; IEEE; ETSI: 汇聚, 聚合, 缩减, 等级, 级别, 下行控制信道, 集合, 轻型, 搜索空间, 窄带物联网, 机器通信, gNB, CORESET, NR-lite, NR-light, NB-IoT, Reduced capability, CCE, PDCCH, REG, aggregation level, AL

**C. DOCUMENTS CONSIDERED TO BE RELEVANT**

| Category* | Citation of document, with indication, where appropriate, of the relevant passages | Relevant to claim No. |
|---|---|---|
| X | US 2013308572 A1 (SAMSUNG ELECTRONICS CO., LTD.) 21 November 2013 (2013-11-21) description paragraphs [0178]-[0193] | 1-20 |
| A | CN 108270514 A (ZTE CORPORATION) 10 July 2018 (2018-07-10) entire document | 1-20 |
| A | CN 109495234 A (BEIJING NORTHERN FIBERHOME TECHNOLOGIES CO., LTD.) 19 March 2019 (2019-03-19) entire document | 1-20 |
| A | CN 108934068 A (RESEARCH INSTITUTE OF CHINA MOBILE COMMUNICATIONS CORPORATION et al.) 04 December 2018 (2018-12-04) entire document | 1-20 |
| A | TCL COMMUNICATION et al. "Smart-Home support by NR-Light" *3GPP TSG RAN #86 RP-192836*, 02 December 2019 (2019-12-02), entire document | 1-20 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 January 2021** | **20 January 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/084561**

| Patent document cited in search report | | | Publication date (day/month/year) | Patent family member(s) | | | Publication date (day/month/year) |
|---|---|---|---|---|---|---|---|
| US | 2013308572 | A1 | 21 November 2013 | ES | 2705250 | T3 | 22 March 2019 |
| | | | | EP | 2853044 | A1 | 01 April 2015 |
| | | | | KR | 20150013881 | A | 05 February 2015 |
| | | | | KR | 102059331 | B1 | 26 December 2019 |
| | | | | EP | 2853044 | A4 | 20 January 2016 |
| | | | | US | 9167585 | B2 | 20 October 2015 |
| | | | | WO | 2013176462 | A1 | 28 November 2013 |
| | | | | EP | 2853044 | B1 | 07 November 2018 |
| CN | 108270514 | A | 10 July 2018 | WO | 2018126777 | A1 | 12 July 2018 |
| CN | 109495234 | A | 19 March 2019 | None | | | |
| CN | 108934068 | A | 04 December 2018 | None | | | |

Form PCT/ISA/210 (patent family annex) (January 2015)